# EUROPEAN PATENT APPLICATION

(11) **EP 1 045 551 A2**
(43) Date of publication of application: **18.10.2000**
(21) Application number: 00302838.8
(22) Date of filing: 04.04.2000
(51) Int. Cl.: H04L 12/28, H04L 29/06

(54) **Method for transmission between data networks and wireless communication system**

(30) Priority: 15.04.1999 US 292239
(71) Applicant: LUCENT TECHNOLOGIES INC., Murray Hill, New Jersey 07974-0636 (US)
(72) Inventor: Kiang, Roger T., Basking Ridge, New Jersey 07920 (US); Meyers, Martin Howard, Montclair, New Jersey 07043 (US); Kuo, Wen-Yi, Parsippany, New Jersey 07045 (US)
(74) Representative: Buckley, Christopher Simon Thirsk

(57) **Abstract**

A method is provided for the establishment of a transmission protocol proxy means at an intermediate point in a communications link between the mobile user and the data node. That transmission protocol proxy means operates to intercept data packets from the data source, which may be the data node or the mobile user, buffer those packets prior to forwarding on to the intended data sink, and return an acknowledgment to the data source indicating receipt of the data packets, according to the operative transmission protocol.

## Description

### Field Of The Invention

This invention relates to communication systems and, more particularly, to the transfer of data between a landline network and a wireless network.

### Background Of The Invention

Wireless communication systems allow the transmission of information signals between a mobile user and a source or sink for such information signals. That source/sink will typically be at a fixed location and interconnected with the wireless system via a landline communications network. Both analog (first generation) and digital (second generation) systems have been developed to transmit information signals over communication channels linking the mobile user with such an information source/sink. Digital methods tend to afford several advantages over analog systems, including improved immunity to channel noise and interference, increased capacity, and encryption for secure communications.

First generation wireless systems were primarily directed to voice communication, but the digital technology of second generation systems provides support for both voice and data applications. Several modulation/coding arrangements have been developed, such as frequency division multiple access (FDMA), time division multiple access (TDMA) and code division multiple access (CDMA), to increase the number of users that can access a wireless network. CDMA systems are more immune to multi-path distortion and co-channel interference than FDMA and TDMA systems and reduce the burden of frequency/channel planning that is common with FDMA and TDMA systems.

While first- and second-generation wireless systems were designed to support voice communication with limited data communication capabilities, third-generation wireless systems are expected to effectively handle a large variety of services. Using wide-band multiple access technologies such as CDMA, the third generation systems will handle voice, video, data and image signals. Among the features which will be supported by third-generation systems is the transmission of high-speed data between a mobile terminal and a landline network. As is known, high-speed data communications is often characterized by a short transmission "burst" at a high data transmission rate, followed by some longer period of little or no transmission activity from the data source. To accommodate the bursty nature of such high-speed data services in wireless systems, it is necessary for the communications system to assign a large bandwidth segment (corresponding to the high data rate) from time to time for the duration of the data burst. With the increased ability of third generation systems to handle such bursty high-speed data transmission, throughput for users can be advantageously improved.

Other factors, however, may limit the throughput which can be achieved via such a high-speed wireless link. In particular, the data transmission protocol will often impose signaling constraints which gate the data throughput and which are not readily accommodated by the wireless system. Thus, there is a need to address such transmission-protocol signaling constraints in a manner to improve data throughput in respect to a wireless system.

### Summary Of The Invention

It is an object of the invention to improve data throughput for a communications link between a data node and a mobile user, where the communications link includes both a wireless network portion and a landline network portion. To that end, a method is disclosed for the establishment of a transmission protocol proxy means at an intermediate point in the communications link between the mobile user and the data node. That transmission protocol proxy means operates to intercept data packets from the data source, which may be the data node or the mobile user, buffer those packets prior to forwarding on to the intended data sink, and return an acknowledgment to the data source indicating receipt of the data packets, according to the operative transmission protocol.

Through use of a transmission protocol proxy means according to the invention, a data source sending data according to a transmission protocol which gates the data transmission rate in relation to how quickly acknowledgment signals are returned, will avoid the relatively long delay in return of an acknowledgment signal which often characterizes an end-to-end connection which includes a wireless network. Because the data source will receive its acknowledgment signal from the intermediately situated transmission protocol proxy means, the delay from the transmission of the packets in question will be significantly less than for an acknowledgment based on a round trip --data packets from source to sink, return acknowledgment from sink to source -- over the full transmission link. Thus the transmission data rate from the data source can be substantially increase, with a resulting increase in throughput for the communications link.

### Brief Description Of The Drawings

Figure 1 illustrates a typical structure of a wireless communication system in which the methodology of the invention would be employed.
Figures 2A and 2B provide an illustration of the operation of the method of the invention in the forward direction of data flow.
Figures 3A and 3B provide an illustration of the operation of the method of the invention in the forward direction of data flow.

### Detailed Description Of The Invention

The focus of early wireless systems, particularly first generation analog systems, was primarily voice communication. With second generation wireless systems, including CDMA, TDMA and GSM, came varying degrees of improvement in terms of voice quality, network capacity and enhanced services. However, while second generation systems are suitable to the provision of voice, low rate data, fax and messaging, they are generally not able to effectively and efficiently address requirements for high speed mobile data rates. The evolution to third generation wireless communications represents, essentially, a paradigm shift to the world of multimedia mobile communications, where users will have access not just to voice services but also to video, image, text, graphic and data communications. The third generation networks are expected to provide mobile users with data rates of between 144Kbps and 2Mbps.

However, while these third generation wireless networks are capable of supporting quite high data rates, the actual assignment of such a data rate by the wireless system is typically a function of an input rate for the channel in question, such as the degree of fill for an input buffer. Where a data stream originates at a data node in an interconnected landline network, there are characteristics of commonly applied data transmission protocols which tend to frustrate the objective of a stepped up data rate for the wireless portion of the communications path. As will be shown below, the invention provides a novel methodology for improving interoperability between a wireless network and an interconnected landline data network, thereby providing improved throughput for the total communications path.

As is well known, data to be transmitted over a communications path is typically formulated into a series of packets, where each packet will contain some number of bytes of information in the data stream. In the discussion following the invention will be described in terms of a preferred embodiment where the transmission of the data packets over the communications channel is based on use of the TCP/IP suite of transmission protocols. The described embodiment also assumes the use of CDMA encoding of the data signals transmitted over the wireless portion of the communications path. It should be apparent, however, that the methodology of the invention can also be applied for other transmission protocols, as well as for other wireless channelization arrangements, including TDMA and GSM.

To aid a better understanding of the methodology of the invention, it is useful to briefly consider certain aspects of data transmission under the TCP/IP protocol -- which is really a suite of protocols for application in the transport layer and in the network layer of a communications network. In the usual case, for a communications path linking a data source with a receiving location, only the source and the receiver run the TCP protocol, which includes, among other things, an error checking function. For those nodes in the communications path between the source and the receiver, only the IP protocol is run. Under the IP protocol, each node in the communications path checks the address of a received packet and routes it onward to a proper next node in a path toward the receiver.

At the receiver, if a packet is correctly received, an acknowledgment signal ("ACK") in the TCP level will be issued and sent back to the source TCP level. At the source TCP, if the ACK signal for a transmitted packet is not received for a certain time, a re-transmission of the packet will be performed. In addition, such a delayed receipt of the ACK signal may cause the data transmission rate of the source to be downgraded because the source will assume that some congestion issue exists in the communications path.

The transmission of data packets under the TCP/IP protocol is characterized by a continuing series of "handshaking" events -- *i.e.*, after the transmission by the data source of one or more packets, the source looks for an ACK signal from the data sink prior to transmitting additional packets. This process of transmitting a group of packets and awaiting acknowledgment from the receiver that the packets were received in good order prior to transmitting additional packets is often characterized as "handshaking".

At the initiation of a data transmission session, the data source sends out one, or a small number, of packets and awaits the ACK signal from the receiver for that initial packet group. If the ACK signal is returned quickly to the data source, indicating a communications channel operating at a relatively high data rate, the data source increases the number of packets in the packet group being next sent, and again awaits the ACK signal from the receiver (data sink). Assuming that the ACK signal is again received within a pre-determined round-trip transit time over the communications link (thereby giving further indication of a high data rate available in the communications channel), the data source further increases the number of packets in the packet group being next sent. This process continues, with the packet group size increasing (often exponentially) with each adjustment, until either an ACK signal is received for which the round-trip transit time is greater than the threshold time established to permit an increase in the number of packets sent, or the data source reaches the maximum transmission data rate which it can sustain.

As should be apparent from the foregoing, the process of the data source continually stepping up the data rate -- *i.e.*, increasing the number of packets transmitted in a given group for each consecutive group transmitted -- to the point of providing a high transmission data rate over the communications channel, assumes the existence of a channel operating at that high data rate. Otherwise the transit time over the communications link for the packets being sent from the source to the sink and the return time for the acknowledgment signal would not be quick enough to cause the data source to continue the data-rate step up. While such a high data rate channel will generally be available in the case of a purely landline communications channel, the case of the communications channel being composed of both a landline segment and a wireless segment will often present unique problems in this regard. Because of various, more-or-less random delays which may occur in the communications path, particularly in the wireless network portion thereof, the ACK signal may be slow in returning to the data source, thus precluding a further step up in the transmitted data rate, and conceivably causing a step down in that data rate. In addition, as previously described, the default data rate for a wireless network will generally be at a relatively low level, with increases in that wireless data rate being made in response to an indication that a higher data rate stream is present at an input to the wireless network.

Here, something of a paradox exists. The data source and the wireless network use independent, and somewhat conflicting methods for establishing the data rate for the transmission channel. In the case of the wireless network, the data rate is selected as a function of data available for transmission in an input buffer. On the other hand, the data source starts out at a low transmission data rate and steps up that rate based on how fast the ACK signal is received for the preceding packet group. But, since the data source is initially sending at a slow rate, the input buffer for the wireless network will stay relatively empty and the network will accordingly maintain a relatively low rate -- which, among other things, translates into a slow return of the ACK signal from the data sink (which usually would be a mobile station) to the data source. Thus, in their normal operating modes, the data source and the wireless network tend to reinforce the maintenance of a low-level data rate, even though both are capable of handling a much higher data rate.

To address this problem, the method of the invention operates to establish a transmission protocol proxy means at an intermediate point in the communications link between a mobile station served by the wireless network and the data source served by the landline portion of the communications path. Such a transmission protocol proxy means operates to create a pseudo-termination for the data stream. Thus, for data being downloaded from the data source to the mobile station, the packets from the data source are intercepted and temporarily stored in a buffer at the transmission protocol proxy means, and an ACK signal sent back to the data source from that transmission protocol proxy means. The data source thus gets a quick ACK return signal, which leads to a quick step-up of the data rate from that source. Because the buffer at the transmission protocol proxy means will also quickly fill as the data source steps up the transmitted data rate, this provides the necessary basis for the wireless network to assign a high data rate for the wireless portion of the communications link. In effect, implementation of the transmission protocol proxy means according to the method of the invention counteracts the low data-rate predispositions of the data source and of the wireless network in such an interconnection arrangement. Accordingly, a data rate is established for such a wireless/landline communications link at a level limited only by the inherent capabilities of the data source or of the wireless network.

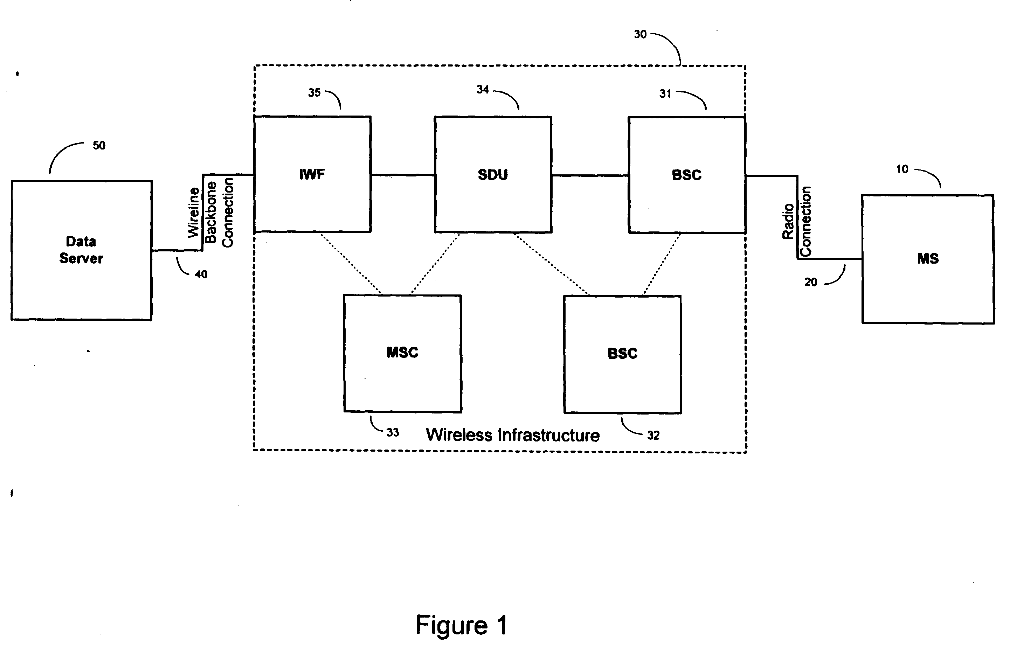

An illustrative network embodiment in which the methodology of the invention may be carried out is depicted in Figure 1. From a global perspective, that illustrative network embodiment can be seen to comprise a Mobile Station (MS) **10** in communication with a Wireless Infrastructure **30** via a Radio Connection **20**. The Wireless Infrastructure is in turn connected with Data Server **50** via Wireline Backbone Connection **40**, which may included switched circuits via the PSTN or an ISDN network, virtual circuits via an ATM or other packet network, or any other form of landline connection within the contemplation of the art.

The Wireless Infrastructure **30**, which carries out switching and control functions for the wireless network associated with MS **10**, and is depicted as configured to process data transmissions, further includes Base Transceiver Station (BTS) **31**, Base Switching Station (BSC) **32**, Mobile Switching Center (MSC) **33**, Selection Distribution Unit (SDU) **34** and Interworking Function (IWF) **35**. As is well known in the art, many of these functions are replicated several times in a complete wireless network, but for purposes of illustration here, only one instance of each function is shown. In addition, certain functions may be combined into a single hardware implementation -- *e.g.*, BSC, SDU and IWF -- but for convenience of illustration are here shown separately.

In the Wireless Infrastructure, the signal transmission path, as shown in the figure, is comprised of BTS **31**, SDU **34** and IWF **35**, while the BSC **32** and the MSC **34** carry out various well known control and switching functions in respect to the wireless network. In the signal transmission path, the BTS operates to establish and maintain the radio link connecting the MS with the Wireless Infrastructure. The SDU operates to collect and distribute data sent to, or received from the BTS. The IWF acts as a gateway between wireless networks and wireline PSTN/packet data networks by providing the interworking and protocol conversions required to deliver packet or circuit-switched data capability to mobile users.

The IWF gateway function, as implemented in the prior art, only carries out IP protocol function, as it acts as a network node function -- *i.e.*, It only check the packet's address and routes the packet to the correct next node in the communications path (here, the end user's mobile terminal). Since the packet(s) being transmitted from the Data Server to the user terminal (MS) are subject to the previously described characteristic of wireless data-rate selection being a function of data input, the TCP ACK signal from the MS can be returned to the server at a slow rate, causing the TCP function at the source (data server) to reduce, or at least fail to increase the rate at which packets are transmitted from the source.

According to the method of the invention, however, a transmission protocol proxy means is provided at an intermediate point in the communications path, and for the illustrative embodiment, that intermediate point is selected as the IWF gateway. Thus, the IWF TCP Proxy will receive and temporarily buffer packets received from the Data Server prior to forwarding those packets on to the MS, as a new TCP origination. In particular, the TCP function at the IWF TCP Proxy will verify that packet received from the Data Server and destined for a particular user (illustratively MS **10**) are correctly received. If so, the IWF TCP Proxy causes an ACK for those packets to be returned to the Data Server immediately. Thus, from the perspective of the Data Server, those packets have reached the intended destination, and, because the ACK was returned quickly, the data rate may be scaled up.

At the same time, the IWF TCP Proxy will be buffering packets for the user (since the IWF TCP Proxy is now an agent for the user) and, as soon as a sufficient number of packets is available in its queue to provoke a high data rate in the wireless network, it will start a TCP connection from itself to the end user. As will be apparent, the illustrative data flow just described is directed to the forward link of the wireless system -- *i.e.*, data flow from server to mobile user. For the wireless system reverse link, the invention will perform a similar but oppositely directed operation.

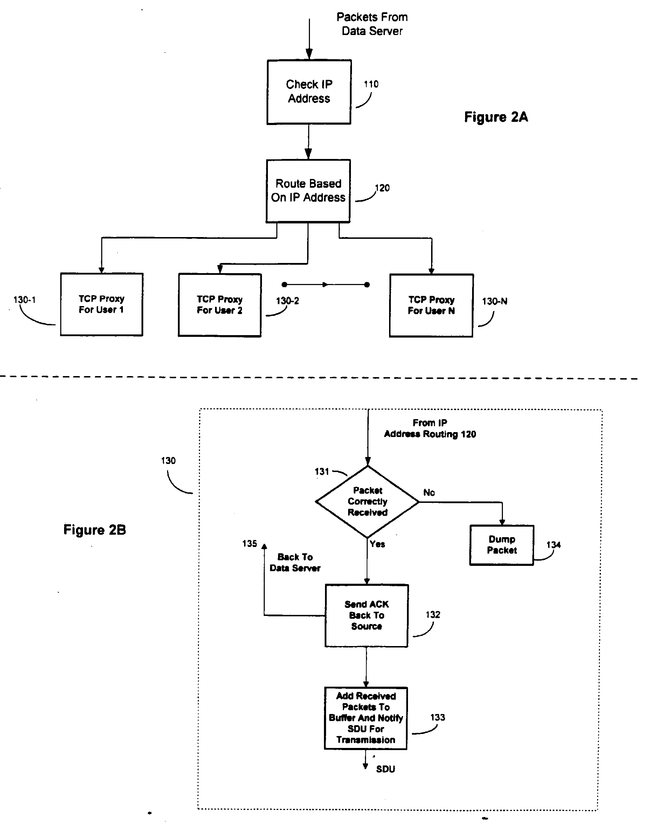

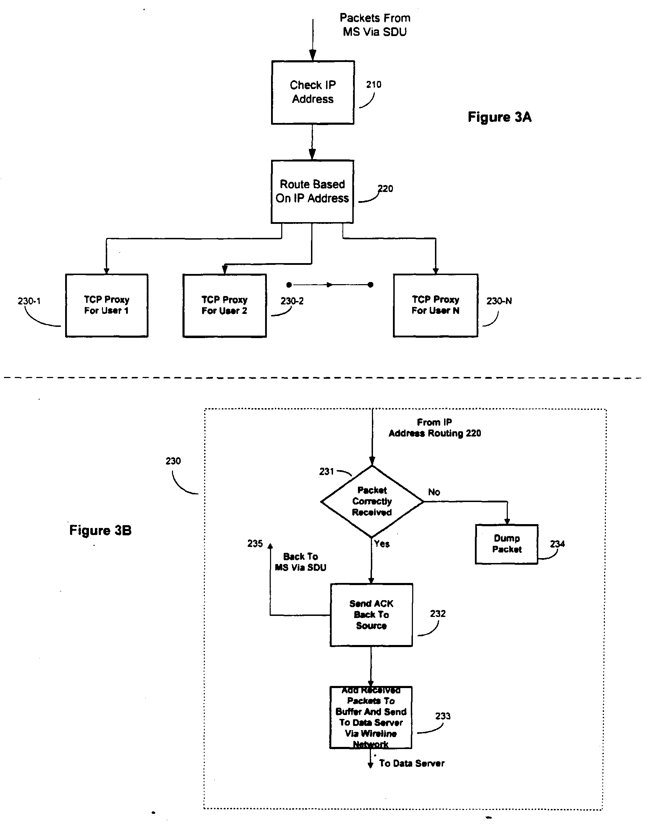

A more detailed depiction of the functional operation of this embodiment of the invention is shown in Figures 2 and 3, where Figure 2 is directed to operation of the invention in the forward direction (data flow from Data Server to MS) and Figure 3 is directed to operation in the reverse direction (data flow from MS to Data Server). Considering first the forward direction operation of Figure 2, the upper portion of the figure, designated Figure 2A, provides a global view of the IP packet routing in respect to the TCP Proxy function provided for various users served by the wireless system. As shown in the figure, packets arriving at the interface (IWF for this embodiment) from the Data Server are first checked for the IP address of the packet at step **110**. The IP address so determined then provides the basis for routing the packet to the TCP Proxy associated with the user for which the communications channel has been established at step **120**. As shown at step **130**, a separate TCP Proxy is established for each user engaged in high-rate data transmission via the wireless system. Note however that, while a separate memory space will be established for each TCP Proxy **130-1** to **130-N** in the operational embodiment of the invention, it is contemplated that the processing associated with the functions described herein will be carried out by a single processor in communication with all such memory spaces.

The particular operations carried out by an exemplary TCP Proxy **130** are depicted in flow-chart form in the lower portion of Figure 2, designated Figure 2B. Once a packet is received at this exemplary TCP Proxy (from the IP Routing step **120** of Figure 2A) it is checked for error according to established TCP protocol procedure and a decision step **131** is applied respecting whether the packet is received correctly. If the packet were not received correctly, it would be discarded at step **134** (and, of course, the source would not receive an ACK signal in respect to that packet) Assuming that the packet is received correctly, the acknowledgment step **132** is carried out and an ACK is returned to the data source (Data Server **50**). The correctly received and acknowledged packet is then added to a buffer at step **133** and a notification sent to the SDU **34**. This process is of course iteratively repeated for each packet (or group of packets) sent from the Data Server for the designated MS. Once the buffer at the TCP Proxy has reached a sufficient fill to trigger the wireless system to implement an appropriately high data rate, the SDU operates to provide the queued packets as an input to the wireless channel.

The reverse direction operation of the invention as depicted in Figure 3 is substantially similar -- the essential difference being a reversal of the direction of data flow -- and need not be discussed in detail. Note that the packets arriving at the IP address checking step **210** are received from the mobile station (MS) and routed via the SDU to the TCP Proxy for the indicated user. Note also that, once a packet from the MS has been confirmed as correctly received and an ACK sent back to the MS, at steps **231** and **232**, the packet is added to a buffer, at step **233**, to be sent to the Data Server upon the buffer achieving an appropriate state of fill.

In summary, the key idea of the invention is to split the TCP connection between a data server and an end user into two TCP connections:
Data Server ⇔ IWF
IWF ⇔ End User
Doing so will increase the TCP ACK rate so that a large chunk of data can be ready for transmission in the IWF TCP Proxy buffer (forward link) or the mobile station buffer (reverse link) and yield higher data throughput for wireless connections.

### Conclusion

The invention provides a novel means of improving the data throughput for a communications channel involving the use of a wireless communications network. A method is disclosed for replicating a transmission protocol function, along with contemporaneous data buffering, at an intermediate point in such a communications channel. With the method of the invention, a data rate may be achieved which is only limited by inherent restraints in the underlying communications channel infrastructure.

Numerous modifications and alternative embodiments of the invention will be apparent to those skilled in the art in view of the foregoing description. Accordingly, this description is to be construed as illustrative only and is for the purpose of teaching those skilled in the art the best mode of carrying out the invention and is not intended to illustrate all possible forms thereof. It is also understood that the words used are words of description, rather that limitation, and that details of the structure may be varied substantially without departing from the spirit of the invention and the exclusive use of all modifications which come within the scope of the appended claims is reserved

## Claims

1. In a communications system operable to provide a communications link between a mobile user and a data node, wherein a portion of said communications link is provided via a wireless communications network, and another portion provided via a landline network, a method for transmitting data segments between said mobile user and said data node comprising the steps of:
establishing, at an intermediate point in said communications link, a transmission protocol proxy means in respect to data transmitted between said date node and said mobile user; and
causing said transmission protocol proxy means to buffer data segments received at an input thereof and to acknowledge receipt of data segments in said buffer according to said transmission protocol.

2. The method of transmitting data segments of Claim 1 wherein said intermediate point in said communications link is selected as an interface between said wireless portion and said landline portion of said communications link.

3. The method of transmitting data segments of Claim 2 wherein said interface is at an Interworking Function for said wireless system.

4. The method of transmitting data segments of Claim 1 wherein said transmission protocol proxy means operates in accordance with the TCP/IP protocol suite.

5. The method of transmitting data segments of Claim 4 wherein said transmission protocol proxy means operates to apply TCP error checking for data segments received at an input to said transmission protocol proxy means.

6. The method of transmitting data segments of Claim 5 wherein said transmission protocol proxy means operates to cause a signal to be returned to a source of said data segment indicative of a successful receipt of a given data segment.

7. The method of transmitting data segments of Claim 6 wherein said signal indicative of successful receipt is a TCP ACK signal.

8. The method of transmitting data segments of Claim 1 wherein said buffer operates to establish a data-segment queue sufficient to establish and maintain a desired data rate in said communications link.

9. The method of transmitting data segments of Claim 1 wherein said buffer operates to establish a data-segment queue for data segments received at said transmission protocol proxy means and an output of said queue is provided as an input to said wireless portion of said communications link.

10. The method of transmitting data segments of Claim 9 wherein said queue output provided as an input to said wireless portion is sufficient to establish and maintain a desired data rate for said wireless portion of said communications link.

11. A transmission protocol proxy operable within a communications link between a mobile user and a data node, wherein a portion of said communications link is provided via a wireless communications network, and another portion provided via a landline network, said transmission protocol proxy comprising:
memory means for receiving and storing data segments transmitted over said communications link; and
means for inspecting ones of said data segments received at said memory means and for carrying out a transmission protocol function in relation to said inspection.

12. The transmission protocol proxy of Claim 11 wherein said applied transmission protocol function is established in accordance with the TCP/IP protocol suite.

13. The transmission protocol proxy of Claim 12 wherein said applied transmission protocol function includes TCP error checking for data segments received at an input to said transmission protocol proxy.

14. The transmission protocol proxy of Claim 13 wherein said applied transmission protocol function operates to cause a signal to be returned to a source of said data segments indicative of a successful receipt of a given data segment.

15. The transmission protocol proxy of Claim 14 wherein said signal indicative of successful receipt is a TCP ACK signal.

16. The transmission protocol proxy of Claim 11 wherein said memory means operates to establish a data-segment queue sufficient to establish and maintain a desired data rate in said communications link.

17. The transmission protocol proxy of Claim 11 wherein said memory means operates to establish a data-segment queue for data segments received at input to said transmission protocol proxy and an output of said queue is provided as an input to said wireless portion of said communications link.

18. The transmission protocol proxy of Claim 17 wherein said queue output provided as an input to said wireless portion is sufficient to establish and maintain a desired data rate for said wireless portion of said communications link.

19. The transmission protocol proxy of Claim 17 wherein a location point in said communications link for said transmission protocol proxy is selected as an interface between said wireless portion and said landline portion of said communications link.

20. The transmission protocol proxy of Claim 19 wherein said selected interface is at an Interworking Function for said wireless system.
